# EUROPÄISCHE PATENTSCHRIFT

(11) **EP 3 489 969 B1**
(45) Veröffentlichungstag und Bekanntmachung des Hinweises auf die Patenterteilung: **07.10.2020**
(21) Anmeldenummer: 18191210.6
(22) Anmeldetag: 26.03.2015
(51) Int. Cl.: H01B 1/22, H01F 1/01, D01F 1/09, D01F 6/62

(54) **FASER AUS KUNSTSTOFF MIT ELEKTRISCHER LEITFÄHIGKEIT**
FIBRE MADE OF PLASTIC WITH ELECTRICAL CONDUCTIVITY
FIBRE DE MATIÈRE PLASTIQUE À CONDUCTIVITÉ ÉLECTRIQUE

(30) Priorität: 26.03.2014 DE 102014004592
(43) Veröffentlichungstag der Anmeldung: 29.05.2019
(62) Teilanmeldung aus: 15731491.5
(73) Patentinhaber: EDD Innovations GmbH, 22393 Hamburg (DE)
(72) Erfinder: VAN HATTUM, Edgar Johannes, 29303 Bergen (DE)
(74) Vertreter: Prinz & Partner mbB

(56) Entgegenhaltungen:
- WO-A2-2010/108883
- DE-A1- 2 251 071
- US-A- 3 506 744
- US-A1- 2005 019 572
- US-A1- 2008 139 065
- US-A1- 2011 147 673
- TEGUS O ET AL: "TOPICAL REVIEW - MAGNETISM, MAGNETIC MATERIALS, AND INTERDISCIPLINARY RESEARCH;Phase transitions and magnetocaloric effects in intermetallic compounds MnFeX (X=P, As, Si, Ge)", CHINESE PHYSICS B, CHINESE PHYSICS B, BRISTOL GB, Bd. 22, Nr. 3, 14. März 2013 (2013-03-14), Seite 37506, XP020241977, ISSN: 1674-1056, DOI: 10.1088/1674-1056/22/3/037506

## Beschreibung

Die Erfindung betrifft eine Faser aus Kunststoff mit elektrischer Leitfähigkeit, wobei das Fasermaterial durch einen Grundwerkstoff aus PET oder Aramid gebildet ist, welchem Elemente eingelagert werden. Die Erfindung und der genaue Schutzumfang werden durch die angehängten Ansprüche bestimmt.

Es ist seit geraumer Zeit bekannter Stand der Technik, Kunststoffe oder Kunststoffkompositwerkstoffe für verschiedene technische Anwendungen, beispielsweise als Basismaterial für Kleidungsstücke, als Isolationsmaterial usw. einzusetzen. Eine dieser in großem Umfang eingesetzten Kunststoffsorte ist das Polyethylenterephthalat (PET). Dieser PET-Kunststoff ist ein durch Polykondensation hergestellter thermoplastischer Kunststoff aus der Familie der Polyester.

PET ist von polarer Grundstruktur und weist starke zwischenmolekulare Kräfte auf. PET-Moleküle sind darüber hinaus linear, d.h. ohne Vernetzungen aufgebaut. Aufgrund der polar-linearen Struktur ist PET durch teilkristalline Bereiche und Fasern gekennzeichnet, die eine hohe Bruchfestigkeit und Formbeständigkeit auch in Temperaturbereichen von über 80°C verursachen. Somit ist PET als Werkstoff generell auch für diese Temperaturbereiche geeignet.

PET-Werkstoffe werden aus Monomeren wie Terephthalsäure beziehungsweise Benzoldicarbonsäure und Ethylenglycol beziehungsweise Dihydroxyethan oder Ethandiol hergestellt. Um für die gewerbliche Anwendbarkeit relevante Mengen produzieren zu können, erfolgt die großtechnische Herstellung durch Umesterung von Dimethylterephthalat mit Ethandiol. Im Rahmen dieser Gleichgewichtsreaktion entsteht eine unerwünschte Mehrmenge von Ethandiol, beziehungsweise es ist für die Reaktion erforderlich, dass dieser Stoff durch die Reaktionsführung wieder abdestilliert wird, um das Gleichgewicht günstig zu beeinflussen. Die alternativ mögliche Schmelzphasenpolykondensation ist für die Produktion großer Mengen ungeeignet, weil diese Herstellungsform zu große Zeiträume beansprucht. Um eine hohe PET-Güte zu erreichen, wird abhängig vom gewünschten Verwendungszweck eine Festphasenpolykondensation nachgeschaltet, um eine weitere Kondensation zu erreichen. Eine weitere bekannte Herstellungsmöglichkeit von PET besteht in der Veresterung von Ethandiol mit Terephthalsäure.

Generell handelt es sich bei den PET-Molekülen um langkettige Strukturen, die überwiegend aus Kohlenstoff, Wasserstoff und einigen weiteren Atomen bestehen. Die Moleküle besitzen eine spiral- bis knäuelartige Anordnung. Dies führt dazu, dass insbesondere im amorphen Zustand eine Vielzahl von Freiräumen im atomaren Bereich zwischen den Molekülen vorhanden ist. Durch eine axiale oder biaxiale Orientierung des Materials können diese Freiräume verkleinert werden, was beispielsweise zu einer höheren Festigkeit des Materials und zu einer verringerten Gasdurchlässigkeit führt.

Neben der Anwendung von PET in reiner Form ist aus dem Stand der Technik auch dessen Werkstoffmodifikation bekannt. Als Basismaterial für Kompositwerkstoffe können dem thermoplastischen Kunststoff andere Elemente hinzugefügt werden. Im Reinzustand handelt es sich bei PET im Wesentlichen um einen elektrischen Nichtleiter. Durch eine Einlagerung beispielsweise von metallischen Atomen in die Freiräume zwischen den Molekülen oder durch eine Anlagerung von beispielsweise metallischen Atomen an die PET-Moleküle können dem Material in einem gewissen Umfang elektrisch leitfähige Eigenschaften verliehen werden. Entsprechend metallisch dotierte PET-Fasern leiten somit bei einem Anlegen einer Spannung einen elektrischen Strom.

Weiterhin ist bekannt, dass verschiedene, vorwiegend metallische Werkstoffe wie z.B. Legierungen mit Gadolinium oder anderen Seltene-Erden-Metallen, einen magnetokalorischen Effekt aufweisen. Bei dem magnetokalorischen Effekt erwärmt sich das Material, wenn es einem Magnetfeld ausgesetzt wird und es kühlt sich wieder ab, wenn der Magnetfeldeinfluss beendet wird. Ursache dieser Erwärmungsreaktion ist die Ausrichtung der magnetischen Momente des Materials durch das Magnetfeld und deren Abhängigkeit von der Magnetfeldstärke. Durch die Ausrichtungsgeschwindigkeit der magnetischen Momente entsteht Wärme. Eine mögliche Anwendung könnte die Verwendung als Kühlmittel sein, dadurch periodische Magnetisierung und gleichzeitiges Abführen der entstehenden Wärme eine Kühlwirkung erreicht werden kann.

Der magnetokalorische Effekt ist legierungsabhängig stark hysteresebehaftet. Um den magnetokalorischen Effekt auch im Zusammenhang mit Anwendungen zu realisieren, die eine ggf. additive mechanische Belastung bedeutet, werden Legierungen gesucht, die diese physikalischen Effekte und Eigenschaften kombinieren. Ein weiteres Problem der technischen Anwendung dieses Effektes neben dem unerwünschten Hystereseverhalten ist die Tatsache, dass bisher dieser Effekt bei bekannten Legierungen und Werkstoffzusammensetzungen vergleichsweise schwach ausgeprägt ist.

Der Skin-Effekt, auch Stromverdrängung, ist ein Effekt in von höherfrequentem Wechselstrom durchflossenen elektrischen Leitern, durch den die Stromdichte im Inneren eines Leiters niedriger ist als in äußeren Bereichen. Er tritt in relativ zur Skin-Tiefe dicken Leitern und auch bei elektrisch leitfähigen Abschirmungen und Leitungsschirmen auf. Der Skin-Effekt begünstigt mit zunehmender Frequenz die Transferimpedanz geschirmter Leitungen und die Schirmdämpfung leitfähiger Abschirmungen, erhöht aber den Widerstandsbelag einer elektrischen Leitung. Das bedeutet praktisch, dass die Skintiefe, d.h. die Leitschichtdicke, werkstoffabhängig mit zunehmender Wechselstromfrequenz abnimmt. Infolge hoher Wechselstromfrequenzen von mehr als 100 kHz ist innerhalb einer Kupferleitung eine Skintiefe von 0,21 mm vorliegend.

US 2005/019572 A1 offenbart ein Herstellungsverfahren für Polymerchips, die aus einem Metall- oder Metalloxidnanopartikel und mindestens einem Polymermaterial bestehen. DE 2 251 071 A1 offenbart eine Faser mit antistatischen und leitenden Eigenschaften, die aus einem polymeren Material besteht, wobei eine Oberflächenschicht Teilchen aus einem darin eingedrungenen leitenden Material aufweist. US 2011/0147673 A1 offenbart ein Verfahren zur Herstellung von Fasern aus einem Verbundwerkstoff auf der Basis eines thermoplastischen Polymers und von leitenden oder halbleitenden Partikeln, das eine Wärmebehandlung umfasst. US 3,506,744 A1 offenbart eine Polyesterfaser, die kleine Mengen von Alkalimetallsalzen umfasst.

Aufgabe der vorliegenden Erfindung ist es, eine Faser der einleitend genannten Art derart bereitzustellen, dass eine genau definierte Emission und/oder Absorption von Strahlungsenergie und dass eine kostengünstige Produktion möglich ist.

Erfindungsgemäß wird die Aufgabe gelöst dadurch, dass eine Werkstoffgrundkomponente durch PET gebildet wird, welchem durch geeignete Dotierungselemente Eigenschaften eingeprägt werden.

Die Dotierungselemente können dem PET-Werkstoff zusätzlich die Fähigkeit zur wenigstens teilweisen Leitung elektrischer Energie verleihen. Die Dotierungselemente zum einen Eigenschaften als Absorber für Strahlungsenergie generieren, zum anderen können sie Eigenschaften als elektrische Leiter generieren. Durch eine Einlagerung beispielsweise von metallischen Atomen in die Freiräume zwischen den Molekülen oder durch eine Anlagerung von beispielsweise metallischen Atomen an die PET-Moleküle können dem PET-Material in einem gewissen Umfang elektrisch leitfähige Eigenschaften verliehen werden.

Entsprechend metallisch dotierte PET-Fasern leiten somit bei einem Anlegen einer Spannung einen elektrischen Strom. Je nach elektrischem Widerstand dieses Kompositwerkstoffes generiert dieser in Abhängigkeit vom angelegten Strom Strahlung oder absorbiert diese. Die Effekte werden in Abhängigkeit vom zuvor beschriebenen Skin-Effekt und durch additive Absorption von Strahlungsenergie unterstützt. Das bedeutet, dass der erfindungsgemäße PET-Kompositwerkstoff eine neue Werkstoffalternative für die Strahlungsabsorption oder Strahlungsgenerierung zu den bekannten Metall-Fasermaterialien darstellt.

Zusätzlich werden die mechanischen Eigenschaften des PET hinsichtlich seiner Bruchfestigkeit und Formbeständigkeit auch in Temperaturbereichen von über 80°C genutzt, um dem Absorbermaterial Anwendungsbereiche mit diesen erhöhten mechanischen Anforderungen zu eröffnen.

Eine weitere Eigenschaft des erfindungsgemäßen Absorbermaterials besteht in seiner von den jeweiligen Dotierungselementen abhängigen Eigenschaft, wenigstens teilweise elektrisch leitfähig zu sein. Insbesondere wenn der PET-Kompositwerkstoff ein Basismaterial für eine beliebig geartete Wärmequelle darstellt, können die physikalischen Effekte der Absorbtionsfähigkeit und der elektrischen Leitfähigkeit für die Erhöhung der abzugebenden Wärmemenge kombiniert und somit erhöht werden dadurch, dass zusätzlich zur emittierten Wärmestrahlung aufgrund der Strahlungsabsorbtion mittels eines an das PET-Kompositmaterial angelegten Spannung infolge des elektrischen Widerstandes des Materials zusätzlich auf elektrischem Weg Wärmeenergie erzeugt wird.

Eine weiterhin interessante Anwendung des PET-Kompositwerkstoffes ist durch seine Eigenschaft eröffnet, den magnetokalorischen Effekt zu realisieren und gleichzeitig die dem PET zu eigenen verbesserten mechanischen Werkstoffeigenschaften aufzuweisen. Durch geeignete Dotierungselemente lassen sich dem erfindungsgemäßen Material somit auch Kühlwirkungseigenschaften einprägen.

Die erfindungsgemäße Lehre erkennt, dass die für die PET-Dotierung geeigneten Elemente MnFe-Phosphorverbindungen, MnFe(As,PwGexSiz)s; FeMn-PhosphorVerbindungen mit As,Si-Phosphor - Substitution ggf. kombiniert mit La(FeMnP)AlCo; Verbindungen mit Mn-Zn sind.

Eine bevorzugte Anwendung liegt in der Verwendung der Dotierungs-Strukturformel MnFe(As,PwGexSiz)s. Diese Verbindung verfügt über hohe Kühlfähigkeiten bei Temperaturen von 200 bis 600 K, insbesondere bei 280 bis 500 K. Diese Verbindung zeigt einen sehr starken magnetokalorischen Effekt. Der Einsatz dieses Kompounds ist umweltfreundlich aufgrund der Tatsache, dass die umweltproblematischen Substanzen, insbesondere die Mn-Moleküle, in der PET-Grundmatrix gebunden sind. Sehr effiziente Ergebnisse sind erzielbar, wenn x= 0,3-0,7 ist und/oder w kleiner gleich 1-x und z = 1-x-w in seiner strukturellen Verbindung. Vorzugsweise ist in dieser spezifischen Einstellung das Material in einer hexagonalen Strukturierung des Fe2P- realisiert.

Die Herstellung der verschiedenen Werkstoffzusammensetzungen kann in einer Kugelmühle und unter Schutzgasatmosphäre erfolgen.

Eine Legierung von 5g FeMnPO,7GeO,3 mit einer kritischen Temperatur von etwa 350 K kann beispielsweise durch Mischen der reinen Elemente, die eine Qualität von 3N aufweisen, in den folgenden Mengen: FeMnP0,7GeO,3 hergestellt werden. In einer geschlossenen Kugelmühle werden diese Elemente unter einer schützenden Atmosphäre gemahlen, bis ein amorphes oder mikrokristallines Produkt erhalten wird. Je nach den Eigenschaften der Mühle kann ein solches Produkt innerhalb von 20 Minuten bis zu wenigen Stunden gewonnen werden. Das Pulver wird danach in einer geschlossenen Ampulle in geschützter Atmosphäre erhitzt, bis eine Temperatur von etwa 800 bis 1050 GradC erreicht ist. Danach wird dieses auf eine Temperatur von etwa 650 GradC getempert. Die Legierung kristallisiert in einer hexagonalen Fe2P-Struktur.

Eine Legierung von 5g FeMnP0,5Ge0,5 mit einer kritischen Temperatur von etwa 600 K wird durch Mischen der reinen Elemente, die eine Qualität von 3N aufweisen, in den folgenden Mengen: Fe=1,72 g, Mn=1,69 g, P=0,476 g und Ge =1,12 g hergestellt. In einer geschlossenen Kugelmühle werden diese Elemente unter schützender Atmosphäre gemahlen, bis ein amorphes oder mikrokristallines Produkt erhalten wird. Je nach den Eigenschaften der Mühle kann ein solches Produkt innerhalb von 20 Minuten bis zu wenigen Stunden gewonnen werden. Das Pulver wird danach in einer geschlossenen Ampulle in qeschützter Atmosphäre erhitzt, bis eine Temperatur von etwa 800 bis 1050 GradC erreicht ist. Danach wird dieses auf eine Temperatur von etwa 650 GradC getempert.

Die Legierung kristallisiert ebenfalls in einer hexagonalen Fe2P-Struktur.

Eine Legierung von 5g FeMnP0,5Ge0,1Si0,4 mit einer kritischen Temperatur von etwa 300 K wird durch Mischen der reinen Elemente, die eine Qualität von 3N aufweisen, in den folgenden Mengen: Fe=1,93 g, Mn=1,90 g, P=0,535 g, Ge=1,251 g und Si=0,388 g hergestellt. In einer geschlossenen Kugelmühle werden diese Elemente unter schützender Atmosphäre gemahlen, bis ein amorphes oder mikrokristallines Produkt erhalten wird. Je nach den Eigenschaften der Mühle kann ein solches Produkt innerhalb von 20 Minuten bis zu wenigen Stunden gewonnen werden. Das Pulver wird danach in einer geschlossenen Ampulle in geschützter Atmosphäre erhitzt, bis eine Temperatur von etwa 800 bis 1050 GradC erreicht ist. Danach wird dieses auf eine Temperatur von etwa 650 GradC getempert. Die Legierung kristallisiert ebenfalls in einer hexagonalen Fe2P-Struktur.

Eine alternative Ausführung wird erhalten durch Modifikationen von Legierungen der Ausgangsmaterialien anstatt von den reinen Elementen - dies ist besonders vorteilhaft, wenn Si in der Legierung verwendet wird. Dies basiert auf der Tatsache, dass FeSi-Legierungen sehr stabil sind und erhalten werden, wenn reines Fe und Si in der Mühle verfügbar sind.

Eine Legierung von 10 g FeO,86Mnl,14PO,5Si0,35GeO,15, die eine kritische Temperatur von 390 K aufweist, wird erhalten durch Mischen der reinen Elemente, die eine Qualität von 3N aufweisen, und der Legierung Fe2P, die eine Qualität von 2N aufweist (Alpha Aesar 22951), in den folgenden Mengen: Fe2P=4,18 g, Mn=4,26 g, P=0,148 g, Si=0,669 g und Ge=0,742 g.

In einer geschlossenen Kugelmühle werden diese Elemente unter einer schützenden Atmosphäre gemahlen, bis ein amorphes oder mikrokristallines Produkt erhalten wird. Je nach den Eigenschaften der Mühle kann ein solches Produkt innerhalb von 20 Minuten bis zu wenigen Stunden gewonnen werden. Das Pulver wird danach in einer geschlossenen Ampulle in geschützter Atmosphäre erhitzt (gesintert), bis eine Temperatur von etwa 800 bis 1050 Grad C erreicht ist. Danach wird dieses auf eine Temperatur von etwa 650 Grad C getempert. Die vorliegende Erfindung ist nicht auf die beispielhaft beschriebene Ausführung beschränkt. Die Mengen können auf vielfaltige Weise variieren.

In den Zeichnungen sind die der Erfindung zugrundeliegenden Effekte und Ausführungsbeispiele der inneren Struktur des Materials schematisch dargestellt. Es zeigen:
- Fig. 1: den physikalischen Skin-Effekt anhand einer Diagrammdarstellung, d.h. die äquivalente Leitschichtdicke *δ* in mm verschiedener Metalle über der Wechselstromfrequenz f in kHz
- Fig. 3: die Mikrostruktur von FeMnP0,5Si0,5,

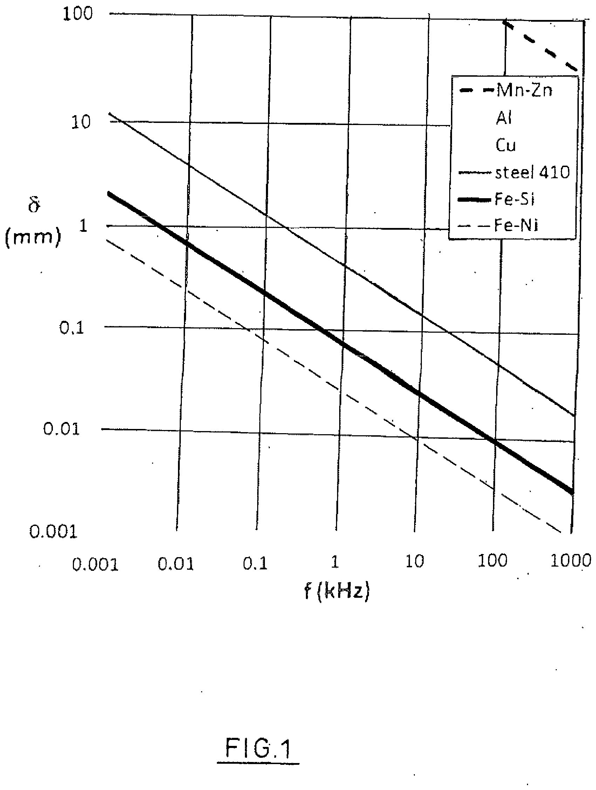

Figur 1 zeigt den physikalischen Effekt der Stromverdrängung in oberflächennahe Randschichten eines stromdurchflossenen Leiters anhand einer Diagrammdarstellung, d.h. die äquivalente Leitschichtdicke *δ* in mm verschiedener Metalle über der Wechselstromfrequenz f in kH.

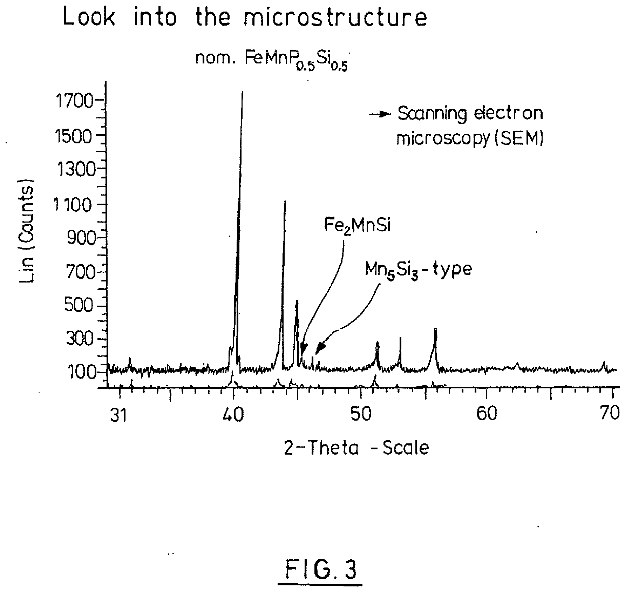

Figur 3 zeigt die bekannte Mikrostruktur von FeMnP0,5Si0,5.

Eine wesentliche Ursache für die elektrisch leitfähigen Eigenschaften der PET-Fasern durch die Dotierung liegt darin, dass in der dielektrischen Trägerstruktur des Polyesters die Metallpartikel zwar räumlich voneinander getrennt sind, dass jedoch die Elektronenwolken der Metallpartikel einander überlappen. Die Einbettung der Dotierungselemente in den Polyester verhindert Zersetzungsprozesse und verhindert äußere Einflüsse.

Insbesondere werden eine Reoxidation, eine Reibungszersetzung vermieden und die Flexibilität verbessert.

Es können im Hinblick auf die Strahlung genau fixierte, scharf begrenzte und reproduzierbare Frequenzgänge erreicht werden.

Insbesondere ist es im Hinblick auf die Strahlungsemission möglich, durch eine geeignete Dotierung durch die Generierung von Infrarotstrahlung im FrequenzBereich von 4,5µm bis 11,5 µm zu erreichen.

Alternativ zur Verwendung von Fasern aus PET ist es auch möglich, Aramide einzusetzen. Die Herstellung der Fasern kann Elektro-Spinningverfahren erfolgen.

Ein typischer Durchmesser der Fasern liegt mit Bereich 2 µm bis 6 µm. Die Dotierung mit den Metalpartikeln erfolgt vorzugsweise in einem Gasplasma.

Eine typische Faserlänge liegt im Bereich von 2cm bis 4cm.

Fe2P-basierte Verbindungen bieten die Möglichkeit zur Verhinderung von Ionisationsprozessen, die binäre intermetallische Verbindung Fe2Ph kann als Basislegierung für eine praktikable Mischung aus Materialien berücksichtigt werden. Diese Verbindung kristallisiert in der hexagonalen, nichtpunktsymmetrischen FeMn-Phosphor-Verbindung, und hat alle positiven Eigenschaften, um als Transponder für Haus - Kühlsysteme verwendet zu werden.

Substitutionen von Fe und/oder Mn sind denkbar mit AS, Zi, Ni, Ge, Si. Fe belegt die 3g- und 3f-Seiten und p die lb- und 2c- Seiten. Dadurch erhält man eine Stapelung von abwechselnd P- reichen und -armen P-Schichten. Die Neutronenbeugung ergibt, dass das magnetische Moment des Fe auf dem 3g-Seite etwa 2my- B, während der Moment auf den 3f-Seite ist etwa 1my-B. Die hexagonale Form hat schlechte Möglichkeiten, durch die Alterung als magnetische Quelle wiedergewonnen zu werden.

Eine wesentliche Ursache für die elektrisch leitfähigen Eigenschaften der PET-Fasern durch die Dotierung liegt darin, dass in der dielektrischen Trägerstruktur des Polyesters die Metallpartikel zwar räumlich voneinander getrennt sind, dass jedoch die Elektronenwolken der Metallpartikel einander überlappen. Die Einbettung der Dotierungselemente in den Polyester verhindert Zersetzungsprozesse und verhindert äußere Einflüsse.

Insbesondere werden eine Reoxidation, eine Reibungszersetzung vermieden und die Flexibilität verbessert.

## Patentansprüche

1. Faser aus Kunststoff mit elektrischer Leitfähigkeit, wobei das Fasermaterial durch einen Grundwerkstoff aus PET oder Aramid gebildet ist, worin Elemente eingelagert werden, **dadurch gekennzeichnet, dass** die Elemente eine atomare Größe aufweisen und mit einem Abstand derart versehen sind, dass sich Elektronenwolken mindestens bereichsweise überdecken und wobei die induzierten Elemente stromleitende Eigenschaften aufweisen, sodass die Faser wenigstens teilweise elektrisch leitend ist, wobei die Faser bei angelegter elektrischer Spannung Wärmeenergie erzeugt, wobei die induzierten Elemente durch MnFe-Phosphorverbindungen gebildet sind, oder wobei die induzierten Elemente durch MnFe(As,P_{w}GeₓSi_{z})ₛ gebildet sind mit x = 0,3 - 0,7 und w kleiner gleich 1 - x und z = 1 - x - w, oder wobei die induzierten Elemente durch FeMn-PhosphorVerbindungen mit As,Si-Phosphor-Substitution und kombiniert mit La(FeMnP)AlCo gebildet sind, oder wobei die induzierten Elemente durch Verbindungen mit Mn-Zn gebildet sind, oder wobei die induzierten Elemente durch eine Legierung mit FeMnP_{0,7}Ge_{0,3} oder FeMnP_{0,5}Ge_{0,5} oder Fe_{0,86}Mn_{1,14}P_{0,5}Si_{0,35}Ge_{0,15} gebildet sind.

2. Faser nach Anspruch 1, **dadurch gekennzeichnet, dass** die induzierten Elemente innerhalb des PET-Grundwerkstoffes in einer ungleichen Dichteverteilung eingebracht sind.

3. Faser nach Anspruch 2, **dadurch gekennzeichnet, dass** die induzierten Elemente in Materialquerschnittsbereichen mit Stromverdrängungseffekt weniger dicht angeordnet sind als in Materialquerschnittsbereichen mit Stromverdichtungseffekt.

4. Faser nach Anspruch 2 oder 3, **dadurch gekennzeichnet, dass** die induzierten Elemente in oberflächennahen Materialquerschnittsbereichen der äquivalenten Leitschichtdicke *δ* in einer höheren Dichte eingelagert sind als außerhalb dieses Bereiches.

5. Faser nach einem der vorgehenden Ansprüche, **dadurch gekennzeichnet, dass** die induzierten Elemente durch Dotierung in den PET-Grundwerkstoff eingebracht sind.

6. Faser nach einem der vorhergehenden Ansprüche, wobei die Faser auch in Temperaturbereichen von über 80°C im Wesentlichen bruchfest ist.

7. Verwendung einer Faser gemäß einem der Ansprüche 1 bis 6 bei angelegter elektrischer Spannung an die Faser als Wärmemittel.

## Claims

1. A fibre of plastic material having an electrical conductivity, the fibre material being formed by a base material of PET or aramid in which elements are embedded, **characterized in that** the elements have an atomic size and are provided with a spacing such that electron clouds overlap at least in regions, and the induced elements having current-conducting properties such that the fibre is at least partially electrically conductive, the fibre generating heat energy when electric tension is applied, the induced elements being formed by MnFe phosphorus compounds, or the induced elements being formed by MnFe(As,P_{w}GeₓSi_{z})ₛ, wherein x = 0.3-0.7 and w less than or equal to 1 - x and z = 1-x-w, or the induced elements being formed by FeMn phosphorus compounds with As, Si-phosphorus substitution and possibly combined with La(FeMnP)AlCo, or the induced elements being formed by compounds comprising Mn-Zn, or the induced elements being formed by an alloy comprising FeMnP_{0,7}Ge_{0,3} or FeMnP_{0,5}Ge_{0,5} or Fe_{0,86}Mn_{1,14}P_{0,5}Si_{0,35}Ge_{0,15}.

2. The fibre according to claim 1, **characterized in that** the induced elements are incorporated within the PET base material in an unequal density distribution.

3. The fibre according to claim 2, **characterized in that** the induced elements are arranged so as to be less dense in material cross-sectional regions having a current displacement effect than in material cross-sectional regions having a current densification effect.

4. The fibre according to claim 2 or 3, **characterized in that** the induced elements in near-surface material cross-sectional regions of the equivalent conducting layer thickness δ are embedded in a higher density than outside this region.

5. The fibre according to any of the preceding claims, **characterized in that** the induced elements are incorporated into the PET base material by doping.

6. The fibre according to any of the preceding claims, the fibre being substantially break-proof also in temperature ranges above 80°C.

7. A use of a fibre according to any of claims 1 to 6 as a heat means when an electric tension is applied to the fibre.

## Revendications

1. Fibre en matière plastique à conductivité électrique, la matière fibreuse étant formée par un matériau de base en PET ou en aramide dans lequel des éléments sont encastrés, **caractérisée en ce que** les éléments ont une taille atomique et sont pourvus d'une distance de telle sorte que des nuages d'électrons se recouvrent au moins par zones, et les éléments induits présentant des propriétés de conduction de courant de sorte que la fibre est au moins partiellement électriquement conductrice, les fibres produisant de l'énergie thermique lorsqu'une tension électrique est appliquée, les éléments induits étant formés par des composés de phosphore et de MnFe, ou les éléments induits étant formés par du MnFe(As, P_{w}GeₓSi_{z})ₛ, avec x 0,3-0,7 et w inférieur ou égal à 1 - x et z = 1-x-w, ou les éléments induits étant formés par des composés de FeMn et de phosphore avec une substitution de As, Si-phosphore et éventuellement en combinaison avec du La(FeMnP)AlCo, ou les éléments induits étant formés par des composés comprenant du Mn-Zn, ou les éléments induits étant formés par un alliage comprenant du FeMnP_{0,7}Ge_{0,3} ou du FeMnP_{0,5}Ge_{0,5} ou du Fe_{0,86}Mn_{1,14}P_{0,5}Si_{0,35}Ge_{0,15}.

2. Fibre selon la revendication 1, **caractérisée en ce que** les éléments induits sont incorporés à l'intérieur du matériau de base PET selon une distribution de densité inégale.

3. Fibre selon la revendication 2, **caractérisée en ce que** les éléments induits sont agencés de manière moins dense dans des zones de section transversale de matériau à effet de déplacement de courant que dans des zones de section transversale de matériau à effet de densification de courant.

4. Fibre selon la revendication 2 ou 3, **caractérisée en ce que** dans des zones de section transversale de matériau près de la surface de l'épaisseur de couche conductrice équivalente δ, les éléments induits sont encastrés avec une densité plus élevée qu'à l'extérieur de cette zone.

5. Fibre selon l'une des revendications précédentes, **caractérisée en ce que** les éléments induits sont incorporés dans le matériau de base PET par dopage.

6. Fibre selon l'une des revendications précédentes, la fibre étant sensiblement résistante à la rupture même dans des plages de température supérieures à 80°C.

7. Utilisation d'une fibre selon l'une des revendications 1 à 6 en tant que moyen de chauffe lorsqu'une tension électrique est appliquée à la fibre.
